# EUROPEAN PATENT APPLICATION

(11) **EP 2 365 564 A1**
(43) Date of publication of application: **14.09.2011**
(21) Application number: 11167873.6
(22) Date of filing: 25.07.2007
(51) Int. Cl.: H01M 4/04, H01M 6/14

(54) **Electrochemical cell with positive container**

(30) Priority: 26.07.2006 US 493314
(62) Divisional of application: 07810767.9
(71) Applicant: EVEREADY BATTERY COMPANY, INC., St. Louis, MO 63141 (US)
(72) Inventor: Marple, Jack W., Avon, OH Ohio 44011 (US); Kaplin, David A., Mayfield Heights, OH Ohio 44124 (US)
(74) Representative: von Kreisler Selting Werner

(57) **Abstract**

The present invention relates to an electrochemical cell including an electrode assembly having a lithium negative electrode and a positive electrode comprising iron disulfide. An end cap closes the open end of the container, wherein said end cap includes a terminal cover that has a negative polarity, and the container has a positive polarity.

## Description

### FIELD OF THE INVENTION

The present invention relates to an electrochemical cell, particularly an electrochemical cell having a container with a positive polarity. In one embodiment, the cell is a primary cell that includes an electrode assembly having a lithium negative electrode and a positive electrode, preferably comprising iron disulfide.

### BACKGROUND OF THE INVENTION

Electrochemical cells having a negative electrode including lithium are utilized in many different electronic devices as power sources. Cells incorporating lithium are preferred, among other things, for their energy density and high drain rate performance characteristics.

In order to accommodate electronic device manufacturers, among others, electrochemical cell producers have adopted several conventional cell sizes which manufacturers can rely upon in designing their devices, thereby limiting the amount of electrochemically active material that may be incorporated in such cells. Various government regulations also impose restrictions on electrochemical cell producers as to the maximum amount of certain compounds, such as lithium, that can be included in a particular conventional cell size. Thus, because the shape, size, and in certain cases, the amounts of one or more components are often limited, electrochemical cell producers must modify other aspects of the cell in order to provide increased performance.

Primary electrochemical cells containing a lithium negative electrode are typically can or container negative presumably because the long term shelf stability improves with an anodically protected container. Long term shelf stability becomes even more problematic as positive electrode voltage is increased, with higher voltage electrochemical cells being subject to a greater rate of container corrosion than relatively lower voltage cell systems. Thus, selection of polarity for the container depends on a number of differing factors, including cell chemistry, voltage and the like.

One proposed solution to permit use of a positive container is to use a more stable metal, such as stainless steel. However, the use of stainless steel increases the cost of the cell and increases the internal resistance since stainless steel is a relatively poor electrical conductor. As a result, most electrochemical cell producers choose to design cells wherein the container has a negative polarity.

Designing lithium electrochemical cells with a container negative polarity has several additional undesirable consequences. In order to provide a container with a negative polarity, the electrode assembly, such as a spiral-wound electrode assembly, is typically wound with the lithium of the negative electrode as the outer electrode wrap. Since lithium is a very soft material, it is often protected by a layer of separator as the electrode assembly is inserted into the container. As a result, the quantity of lithium and separator in each cell is increased, which adds to the cost because lithium and separator material are typically the most significant expenditures in a lithium-containing electrochemical cell.

Volumetric issues are of particular concern in electrochemical systems incorporating a lithium electrode, as regulations dictating maximum allowable mass of lithium per cell (at present, a maximum of 1 g of lithium according to certain transportation guidelines) create added incentive for optimizing volumetric utilization within the cell container. Similarly, as consumer purchased primary cells must be sized to standardized dimensions, the ability to volumetrically maximize electrochemically reactive materials within smaller standardized sizes (e.g., "AAA" size or, according to ANSI nomenclature, a R3 size container and smaller) allows for the realization of significant service improvements if the utilization of internal anodic and cathodic materials can be optimized.

Additionally, certain cathodic materials that used in lithium system-most notably, iron disulfide-undergo significant expansion during discharge of the cell (sometimes at a rate that is two to three larger than times the corresponding shrinkage of lithium during discharge), thereby presenting further difficulties in terms of how the current collectors for each electrode are initially electrically connected to the internal components of the cell. Such cathodic expansion also complicates how the electrical connection can be maintained throughout the life of the cell due to outward radial force exerted by the expanding cathode, maintaining good electrical contact during discharge is another problem unique to systems such as lithium-iron disulfide which experience such expansion.

Accordingly, various different approaches have been taken to provide a primary electrochemical cell having a container with a positive polarity. U.S. Patent No. 4,565,752 to Goebel et al. relates to a type of electrochemical cell having elements wound in a coil and inserted in a sealed can. One element has a metal substrate carrying a plurality of holes. The meal substrate supports layers of an electrode material such as porous carbon. Both edges and one end of the substrate is kept free of the material. The bare end of the substrate is on the outside of the coil. The substrate is wider than other elements of the coil, so that when the coil is inserted in the can, the substrate makes contact with all the internal surfaces of the can.

U.S. Patent No. 4,565,753 to Goebel et al. relates to a type of electrochemical cell having two electrode structure elements wound in a coil and inserted in a sealed can. The electrode structures are separated by a porous insulating sheet. One electrode structure has a metal substrate carrying a plurality of holes. The metal substrate supports layers of an electrode material such as porous carbon. Both edges and one end of the substrate is kept free of the material. The bare end of the substrate is on the outside of the coil. The substrate and porous insulating sheets are wider than the other electrode structures, so that when the coil is inserted in the can, the substrate and porous insulating sheet makes contact with the top and bottom internal surfaces of the can.

U.S. Patent No. 4,663,247 to Smilanich et al. relates to a sealed galvanic cell comprising a container and a cover having a coiled electrode assembly disposed in the container. The coiled electrode assembly has an inner exposed electrode of one polarity and an outer exposed electrode of the opposite polarity. A flexible electrically conductive member secured to the cover makes electrical contact with the inner exposed electrode and exerts a radially outward force thereon while the outer exposed electrode makes electrical contact with the wall of the container.

U.S. Patent No. 6,645,670 to Gan relates to providing an electrode assembly based on a sandwich cathode design, but termed a double screen sandwich cathode electrode design and using sandwich cathode electrodes which are, in turn, sandwiched between two half double screen sandwich cathode electrodes, either in a prismatic plate or serpentine- like electrode assembly. In a jellyroll electrode assembly, the cell is provided in a case- positive design and the outside round of the electrode assembly is a half double screen sandwich cathode electrode.

Japanese Laid-Open Publication No. 58-026462 to Matsushita Electric Ind. Co. Ltd. relates to a reported improvement in a spiral electrode structure where the positive and the negative plate strips are wound through a separator, to reduce the defective process when constructing the cell by cutting the end corner section of a current collector exposed at the end-of-winding portion of one plane such as the positive plate located at the outermost circumferential section and providing a tapered shape.

Japanese Laid-Open Publication No. 60-148058 to Sanyo Electric Co. Ltd. relates to reportedly being able to easily pull out a winding pin from a wound electrode after winding was finished by exposing a part of a current collector at a winding starting end of a negative plate when a negative plate is press bonded in a negative current collector.

Japanese Laid-Open Publication No. 01-311569 to Fuji Electrochemical Co. Ltd. relates to reportedly improving and stabilizing electric conductivity by constituting a positive electrode current collector with aluminum or its alloy and electrically connecting it to a positive electrode terminal section in contact with the inner periphery of a case while the outermost periphery section of the current collector is exposed.

### SUMMARY OF THE INVENTION

In view of the above problems and considerations, the need still exists for a primary electrochemical cell having a container positive polarity that provides improved cell performance and optimizes active materials utilized in the cell, as well as a method for making such a cell.

Accordingly, one object of the present invention is to provide a primary electrochemical cell with a container having a positive polarity that performs well under typical operating and temperature conditions, and has a long storage life at a plurality of temperatures. Additionally, such a cell may include a contact assembly that makes a pressure contact with a portion of a cover of the cell in order to provide the cover with a negative polarity.

Another object of the invention to provide an electrochemical cell that exhibits desirable cell performance characteristics such as cell capacity on both low and high power discharge, especially without exceeding regulatory limits on the amounts of active materials (such as lithium) within a cell.

Yet another object of the invention is to provide an electrochemical cell having improved lithium utilization efficiency and improved interfacial contact between the negative electrode and positive electrode. Such a cell may include an electrode assembly having positive and negative electrodes in order to improve cell performance and increase cell capacity.

A further object of the present invention is to provide an electrochemical cell with container positive polarity, wherein material costs are lowered by decreasing the amounts of separator and lithium utilized, when compared to a comparative container negative polarity electrochemical cell. In particular, savings may be achieved through designing the separator to terminate at the end of the negative electrode so that a portion of the positive electrode further extends and makes contact with the sidewall of the container, thereby eliminating the need for separator in this region.

It should be noted that the aforementioned objects are merely exemplary. Those skilled in the art will readily appreciate the numerous advantages and alternatives that can be incorporated according to the following description of embodiments, and all the various derivatives and equivalents thereof, all of which are expressly contemplated as part of this disclosure.

Accordingly, one aspect of the invention is an electrochemical cell, comprising a container having an open end, a positive electrode comprising iron disulfide, a negative electrode comprising lithium, a non-aqueous electrolyte, a separator disposed between the positive electrode and the negative electrode, wherein the separator, the electrolyte, the positive electrode and the negative electrode are disposed in the container, a cover enclosing the open end of the container, said cover not making an electrical contact with the container, and wherein the positive electrode makes electrical contact with the container and the negative electrode makes electrical contact with a portion of the cover.

Another aspect of the invention is an electrochemical cell, comprising a cylindrical container having an open end, a spiral-wound electrode assembly for a primary electrochemical cell situated within the container, said electrode assembly having a positive electrode, a negative lithium-based electrode, an electrolyte and a separator disposed between the electrodes, an end cap sized to enclose the open end of the container, wherein said end cap includes a cover that has a negative polarity and the container has a positive polarity, and wherein the cylindrical container has a greater interior volumetric capacity than the end cap, wherein the positive electrode comprises a current collector, and wherein the positive electrode comprises iron disulfide coated on the current collector, said current collector making electrical contact with the container.

Still another aspect of the invention is an electrochemical cell, comprising a cylindrical container having an open end, a cover fitted across the open end but free from any electrical contact with the container, a spiral-wound electrode assembly positioned within the container, said electrode assembly having a positive electrodes, a negative electrode, an electrolyte and a separator disposed between the electrodes, wherein the positive electrode makes positive electrical contact with the container and the negative electrode makes negative electrical contact with the cover and a contact assembly disposed between the cover and the electrode assembly, wherein the contact assembly makes electrical contact with the negative electrode, and wherein the contact assembly makes a pressure contact with the cover.

A further aspect of the invention is drawn to a method of making an electrochemical cell. Here, positive and negative electrodes are spirally wound with a separator positioned therebetweeen, so as to form an electrode assembly. The negative electrode must comprise lithium, and the positive electrode is preferably iron disulfide. The resulting electrode assembly is then disposed within an open-ended cylindrical container such that the container has a positive polarity. Then, the container sealed so that the cover possesses a negative polarity and the remaining portion of the container possessing a positive polarity.

### BRIEF DESCRIPTION OF THE DRAWINGS

The invention will be better understood and other features and advantages will become apparent by reading the detailed description of the invention, taken together with the drawings, wherein:
FIG. 1 is an elevational view, in cross section, of an embodiment of an electrochemical cell of the present invention, wherein the cell container has a positive polarity;
FIG. 2 is an elevational view of one emobidment of a fixed contact between a negative electrode and a portion of the cover;
FIG. 3 is an elevational view of one embodiment of a non-fixed contact between an electrically conductive member of a negative electrode and a portion of the cover, wherein the electrically conductive member has an accordion shape;
FIG. 4 is an elevational view of another embodiment of a non-fixed contact between an electrically conductive member of a negative electrode and a portion of the cover, wherein the electrically conductive member has a coiled shape; and
FIGs. 5A and 5B are elevational views in a cross section but in a perpendicular plane as compared to the views of FIGs. 1-4, respectively speaking, of electrodes having a jellyroll configuration according to the prior art and of one embodiment of a electrodes having a contrasting jellyroll configuration.

### DETAILED DESCRIPTION OF THE INVENTION

The electrochemical cells of the present invention are preferably primary cells, that each include a positive electrode that makes electrical contact with a container of a cell thereby providing the container with a positive polarity and a negative electrode that makes electrical contact with a portion of a cover thereby providing the cover with a negative polarity, wherein the container is free of electrical contact with the cover. In one embodiment, the negative electrode comprises lithium as the negative electrode active material, preferably with the positive electrode comprising iron disulfide (FeS₂). The positive electrode and negative electrode may be provided in the form of strips, which are joined together with a separator in an electrode assembly, preferably in a jellyroll or spiral-wound configuration, and placed in the container with the positive electrode making electrical contact with the container.

The electrochemical cells of the invention are normally cylindrical in shape and preferably have a maximum height greater than the maximum diameter, with the cylindrical container having a greater interior volumetric capacity than the cover or end cap. Preferably, the dimensions of the cells will match IEC standardized sizes, including but not limited to "AA", "AAA" and "AAAA" sizes. However, the invention can also be adapted to other cell sizes and shapes and to cells with alternative electrode assembly, housing, seal and pressure relief vent designs, etc..

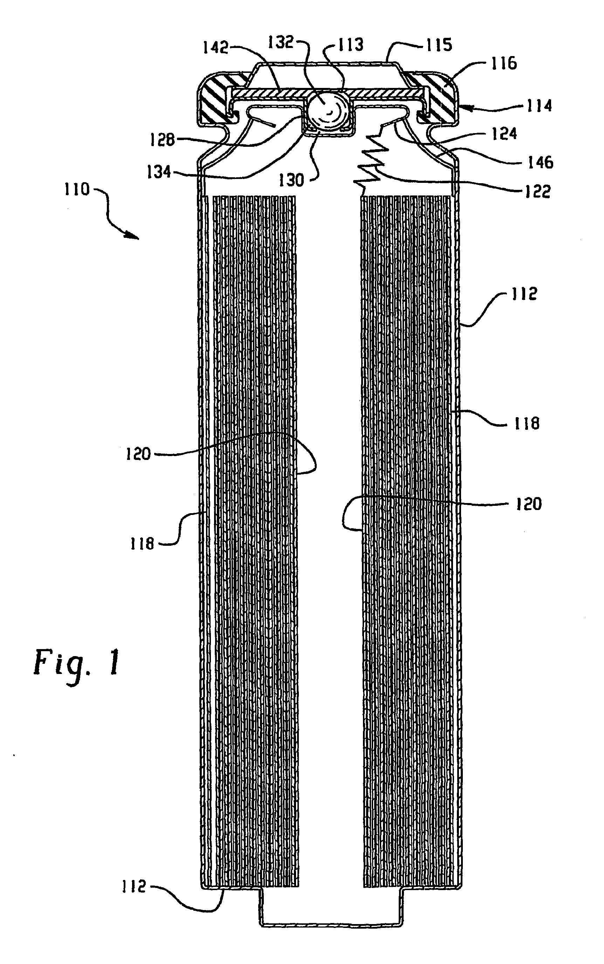

A preferred embodiment of the invention will be better understood with reference to FIG. 1, which shows a primary electrochemical cell 110. Cell 110 is an AA size lithium iron disulfide cylindrical electrochemical cell (also referred to as an FR6 under IEC nomenclature) wherein the electrodes 118, 120 are provided in a jellyroll configuration. Cell 110 has a housing that includes a container 112, which includes a closed bottom and an open top end. U.S. Patent Application Publication No. 2006/0046154, which generally describes some of the features of a cylindrical lithium iron disulfide electrochemical cell common to the current invention (including but not limited to exemplary construction and materials for the container and exemplary active components of the cell), is incorporated by reference herein.

Cell closure 114 is affixed over the open end of the container 112 according to any number of known mechanisms. In a preferred embodiment, cell closure 114 comprises pressure relief vent 113, negative terminal cover 115, gasket 116 and PTC 142. Negative terminal cover 115 may be held in place by the inwardly crimped top edge of container 112 and gasket 116. In a preferred embodiment, container 112 may have a bead or reduced diameter step near the top end which axially and/or radially compresses the container 112 and the cell closure 114, thereby forming an essentially leak-proof seal. Notably, cell closure 114 (and in a more specific and preferred embodiment, gasket 116) must provide electrical insulation between the container 112 and the terminal cover 115 in order to avoid unwanted shorting of the cell 110. Cell closure 114 and container 110 work in conjunction with one another to provide a leak-proof seal for the cell internals, including electrodes 118, 120 and the non-aqueous electrolyte (not shown in Fig. 1).

Cell container 112 is preferably a metal can with an integral closed bottom, although in some embodiments a metal tube that is initially open at both ends can be used instead of a can. The container 112 can be any suitable material with non-limiting examples including stainless steels, nickel plated stainless steels, nickel clad or nickel plated steels, aluminum and alloys thereof. For example, a diffusion annealed, low carbon, aluminum killed, SAE 2006 or equivalent steel with a grain size of ASTM 9 to 11 and equiaxed to slightly elongated grain shape is preferred in one embodiment of the invention. Choice of container material depends upon factors including, but not limited to, conductivity, corrosion resistance, compatibility with internal and active materials within the cell and cost As the container 112 of the cell 110 must have a positive polarity, the bottom of the cell must have a shape, such as shown in FIG. 1, which permits consumers to distinguish it as the positive contact terminal normally found on commercially available batteries. The positive polarity container 112 might also possess a false cover to prevent deep drawing of the can.

The use of aluminum or aluminum alloys as the primary material for the container allows a significant reduction in the overall weight of cell 110. For example, the use of aluminum as the cell container can reduce the container weight by 67% and the overall cell weight by 20%. Notably, use of aluminum to construct a cell having a negative polarity container is not possible since aluminum at the anodic potential can form lithium aluminum alloys which have low mechanical strength. Through the use of aluminum and/or lightweight metals or alloys, significant improvements can be made in the energy density of the overall cell construction, particularly with respect Wh/kg, which is a primary concern for many consumers and users of such electrochemical cells.

Cell closure 114, and including terminal cover 115, must also be made from a conductive material, such as a metal, metal alloy or an appropriate conductive plastic. Suitable examples include, but are not limited to, those used in the construction of the container (discussed above) or other known materials possessing the other qualities discussed herein. In addition to the considerations identified in the preceding paragraph, the complexity of the cover shape, ease of forming/machining/casting/extruding and compatibility with cell internals are all factors for consideration. The cell cover 114 and/or negative terminal cover 115 may have a simple shape, such as a thick, flat disc, or may have a more complex shape, such as the cover shown in FIG. 1, and may be designed to have an attractive appearance when visible on consumer batteries. To the extent that terminal cover 115 or cell cover 114 is located over a pressure relief vent 113, the respective covers generally have one or more holes to facilitate cell venting.

Gasket 116 is a non-conductive portion of the cell cover and is compressed between can 112 and cover 114 to seal the peripheral edges of these components, to prevent corrosion and to inhibit leakage of electrolyte through, around or between these components. Gasket 116 can be made of a polymeric composition, for example, a thermoplastic or thermoset polymer, the composition of which is based in part on the chemical compatibility the electrodes 118, 120 and the electrolyte used in cell 110. Examples of materials that can be used in a gasket 116 include but are not limited to, polypropylene, polyphenylene sulfide, tetrafluoride-perfluoroalkyl vinyl ether co-polymer, polybutylene terephthalate (PBT), ethylene tetrafluoroethylene, polyphthalamide, and blends thereof. A suitable prolypropylene that can be used is PRO-FAX ® 6524 from Basell Polyolephins, of Wilmington, Delaware, USA. A suitable polyphenylene sulfide is available as TECHTRON® PPS from Boedeker Plastics, Inc. of Shiner, Texas, USA. A suitable polyphthalamide is available as Amodel® ET 1001 L from Solvay Advanced Polymers of Alpharetta, Georgia. The polymers can also contain reinforcing inorganic fillers and organic compounds in addition to the base resin, such as glass fibers and the like. Significantly, a material with a low vapor transmission rate for the electrolyte is preferred.

The gasket 116 may be coated with a sealant to provide an even better seal. Ethylene propylene diene terpolymer (EPDM) is a suitable sealant material, but other suitable materials can be used.

A positive temperature coefficient (PTC) device 142 may also be disposed between the peripheral flange of terminal cover 115 and cell cover 114. PTC 142 substantially limits the flow of current under abusive electrical conditions. During normal operation of the cell 110, current flows through the PTC device 142. If the temperature of the cell 110 reaches an abnormally high level, the electrical resistance of the PTC device 142 increases to reduces the current flow, thereby allowing PTC device 142 to slow or prevent cell continued internal heating and pressure buildup resulting from electrical abuses such as external short circuiting, abnormal charging and forced deep discharging. Nevertheless, if internal pressure continues to build to the predetermined release pressure, the pressure relief vent 113 may be activated to relieve the internal pressure.

Cell closure 114 includes a pressure relief vent 113 as a safety mechanism to avoid internal pressure build up and to prevent disassembly of the cell under abusive conditions. In one embodiment, cell cover 114 includes a ball vent comprising an aperture with an inward projecting central vent well 128 with a vent hole 130 in the bottom of the well 128. The aperture is sealed by a vent ball 132 and a thin-walled thermoplastic bushing 134, which is compressed between the vertical wall of the vent well 128 and the periphery of the vent ball 132. When the cell internal pressure exceeds a predetermined level, the vent ball 132, or both the ball 132 and bushing 134, is/are forced out of the aperture to release pressurized gasses from cell 110.

The vent busing 134 is made from a thermoplastic material that is resistant to cold flow at high temperatures (e.g., 75°C). The thermoplastic material comprises a base resin such as ethylene-tetrafluoroethylene, polybutylene terephthlate, polyphenylene sulfide, polyphthal-amide, ethylenechloro-trifluoroethylene, chlorotrifluoroethylene, perfluoroalkoxyalkane, fluorinated perfluoroethylene polypropylene and polyetherether ketone. Ethylene-tetrafluoroethylene copolymer (ETFE), polyphenylene sulfide (PPS), polybutylene terephthalate (PBT) and polyphthalamide are preferred. The resin can be modified by adding a thermal-stabilizing filler to provide a vent bushing with the desired sealing and venting characteristics at high temperatures. The bushing can be injection molded from the thermoplastic material. TEFZEL® HT2004 (ETFE resin with 25 weight percent chopped glass filler) is a preferred thermoplastic material.

The vent ball 132 can be made from any suitable material that is stable in contact with the cell contents and provides the desired cell sealing and venting characteristic. Glasses or metals, such as stainless steel, can be used.

In an alternative embodiment, vent 113 may comprise a single layer or laminar foil vent. Such foil vents prevent vapor transmission and must be chemically compatible with the electrodes 118, 120 and the electrolyte. Optionally, such foil vents may also include an adhesive component activated by pressure, ultrasonic energy and/or heat in order to further perfect the seal. In a preferred embodiment, a four layered vent consisting of oriented polypropylene, polyethylene, aluminum and low density polyethylene may be used, although other materials are possible, as well as varying the number of layers in the laminate. The vent may be crimped, heat sealed and/or otherwise mechanically held in place over an aperture in the cell closure 114. Notably, use of such a vent increases the internal volume of the cell 110 available for electrochemically active materials. In particular and understanding that appropriate materials are utilized and electrical connections are maintained, a foil vent similar to that disclosed in U.S. Patent Application Publication No. 2005/0244706, which is incorporated by reference herein, may be used.

The cell 110 includes positive electrode 118 and negative electrode 120 that are spirally-wound together in a jellyroll configuration, with a separator disposed between positive electrode 118 and negative electrode 120. Negative electrode 120 comprises a foil or sheet of pure lithium or an alloy of lithium selected to enhance the conductivity, ductility, processing capabilities or mechanical strength of the electrode 120. In a preferred embodiment, the lithium may be alloyed with 0.1% to 2.0% aluminum by weight, with most preferred alloy having 0.5% aluminum by weight. This most preferred material is available from Chemetall Foote Corp., Kings Mountain, NC, USA. Negative electrode 118 may be provided in an axial excess at the top terminal edge so as to make an electrical connection to the inner surface of cover 114 through contact spring 124. In a preferred embodiment, an electrically conductive member 122 may be affixed to the negative electrode 120 itself. Most advantageously, the member 122 is affixed along the inner-most surface of negative electrode 120 so as to avoid unwanted contact with positive electrode 118, although so long as the member 122 is in electrical contact with negative electrode 120 and is also electrically separated from positive electrode 118, preferably through the use of a separator (not show in FIG. 1), any position(s) or connection(s) between member 122 and negative electrode 120 will suffice. Additionally, insulating cone 146 (shown in FIG. 1) may be used collar member 122 (and/or the terminal edges of to prevent the electrically conductive member 122 from making contact with container 112, with insulating cone 146 disposed around the peripheral portion of the top of the electrodes 118, 120. The diameter of insulating cone 146 can vary along the longitudinal length thereof to provide a desired arrangement to prevent internal shorting. Alternatively, if the anode tab is appropriately insulated or otherwise encased within a protective wrap or tape, the insulating cone 146 could be eliminated in its entirety while maintaining or possibly even improving the overall reliability of the cell 110.

As indicated above, electrically conductive member 122 serves as an electrical lead or tab to electrically connect the negative electrode 120 to a portion of cell closure 114, which in turn imparts a negative polarity to closure 114 and more specifically terminal cover 115. The electrically conductive member 122 is made from a material, preferably a metal or metal alloy selected for its ductility, mechanical strength, conductivity and compatibility with the electrochemically active materials inside cell 110, including the electrolyte. The electrically conductive member is preferably formed from a strip of metal sized to fit the particular dimensions of cell closure 114, preferably at thickness between 0.025-0.125 mm and a width between 4.5-6.5 mm with the length being sufficient to bridge the space between the electrode 118 and the cell closure 114 while accommodating the particular shape utilized (see below). One of the preferred materials is nickel plated cold rolled steel, although steel, nickel, copper and other similar materials may be possible.

The electrically conductive member 122 is fixedly connected to the negative electrode 118 along at least one portion of the electrode 118. Owing to the properties of lithium, this connection can be accomplished by way of a simple pressure contact which embeds one end of the electrically conductive member 122 within a portion of the negative electrode or by pressing an end of the member onto a surface of the lithium foil. In a preferred embodiment, the electrically conductive member 122 is connected to the negative electrode near the center or core of the spiral winding, although the member may be connected at other and/or multiple locations on electrode 118.

A second portion of the electrically conductive member, preferably its opposing end, is connected to a portion of the cell cover by a fixed connection or by a non-fixed connection. Examples of fixed connections include riveting, crimping, or welding the electrically conductive member to the cell cover, whereas non-fixed connections can be accomplished by pressure contact, interference fits or other engineered solutions that do not require either an adhesive media (e.g., weld melt) or bending/other metal working of both the conductive member and the cell cover (e.g., crimping).

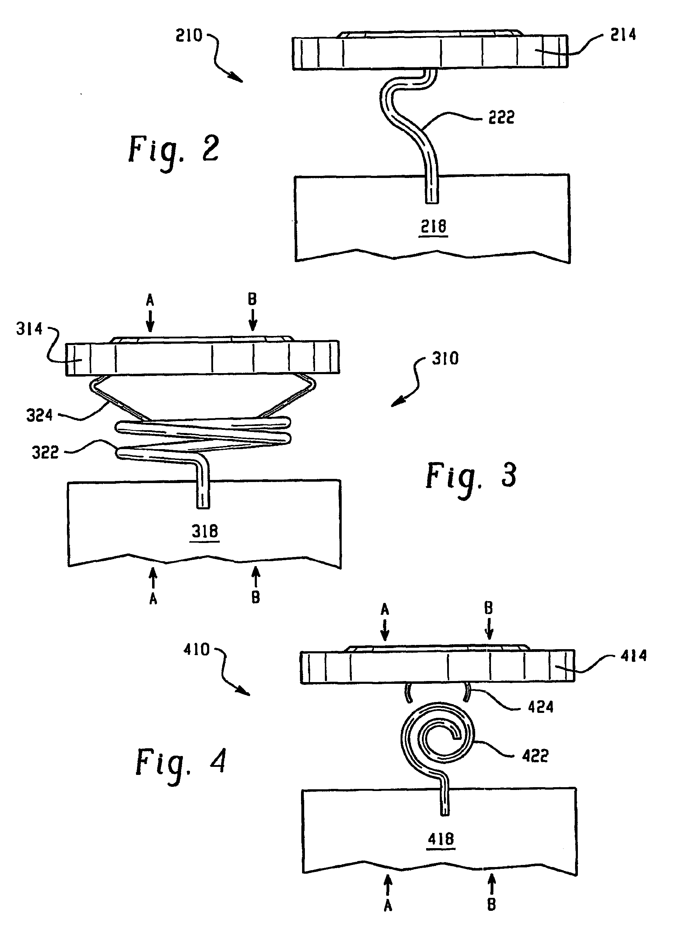

A fixed connection is made, for example as shown in FIG. 2, by welding a terminal end portion of the electrically conductive member 222 to cell cover 214 or any of its constituent parts not specifically shown in FIG. 2 (e.g., contact spring, PTC, etc.). The opposing terminal end of member 222 is connected to the negative electrode 218 as described above (note that positive electrode 220 is not shown in FIG 2). Also, as used throughout the FIGURES, care has been taken to utilize the last two digits of the reference numerals so as to have common components correspond to one another (e.g., reference numeral 122 in FIG. 1 corresponds to 222 in FIG. 2, 322 in FIG. 3, etc.).

As seen in FIG. 3, a non-fixed connection can be connected between the electrically conductive member 322 and a portion of the cell cover 314 via a pressure contact, wherein a a spring and/or compression force is utilized to maintain an electrical connection. The force can be exerted by a component of the cell cover 314, such as spring 324, or by the electrically conductive member 322 that can be biased towards the upper end of the cell toward the cover 314, or both. Member 322 is affixed to electrode 318 as described above and electrode 320 is not pictured. Using such pressure contact allows the omission of processing steps and equipment such as utilized in the above-mentioned welding step (corresponding to a significant savings in terms of manufacturing costs and complexity) and provides the flexibility to fill a cell using a closed vacuum or open vacuum fill. A further advantage of the pressure contact is that the electrode assembly is securely held in a desired position within the can by the pressure contact. Additional benefits of pressure contact include providing good contact between the positive electrode and container bottom, and holding the electrode assembly in place during shock and vibration abuse, the latter allowing the cone (not shown in FIG. 3) to be reduced in size or eliminated in some embodiments. Although an accordion shaped electrically conductive member 322 is shown, electrically conductive member 322 need not have a specialized shape so long as spring 324 provides sufficient biasing force for such a non-fixed contact in order to achieve the purposes stated above.

Another example of a non-fixed pressure contact is shown in FIG. 4. Here, electrically conductive member 422 is provided with an end portion 424 having a coil shape that contacts, via pressure, cover 414. The electrically conductive member 422 is connected to the negative electrode 418. The coil can be formed by any suitable method, such as bending, so that the coil is resilient and exerts a bias or spring-like force towards a portion of cover 414 when assembled in a cell 410.

Notably, in the preferred embodiments shown in FIGS. 3 and 4, member 322, 422 contributes to the compressive force required for these non-fixed connections. In particular, the electrically conductive member 322, 422 intersects separate longitudinal axes defined by lines A-A and B-B along at least two distinct points. In this arrangement member 322, 422 is imparted with spring-like qualities. However, the same spring-like qualities may be created through the selection of an appropriate material and/or through shaping the member 322, 422 to intersect a single axis along at least two distinct points. In particular, the electrically conductive member is generally oriented along an axis between the negative electrode of the electrode assembly and the cell cover with the biasing member, being non-linear in a preferred embodiment, and intersecting the axis a plurality of times at different points thereof, wherein the axis preferably being substantially parallel to a longitudinal axis of the container. However, if used, contact with spring 124 alone may exert enough axial force to maintain the non-fixed connection without the need to specially engineer the member 322, 422.

Positive electrode 118 may comprise an electrochemically active material affixed on one or both sides of an electrically conductive foil, such as aluminum or other suitable materials allowing for appropriate rheological properties to adhere the electrochemically active material. The electrochemically active material is preferably iron disulfide. Notably, positive electrode 118 makes an electrical connection to the container 112 along its axial sidewall and/or through contact with the bottom of the can. As discussed in greater depth below, the electrochemically active material affixed to the foil in a manner that enhances the electrical connection between the positive electrode 118 and the container 112. Insulating material (not shown in FIG. 1) may also be utilized to prevent the electrically conductive member 122 of positive electrode 118 from making contact with negatively polarized cell closure 114 so as to prevent internal shorting. One or more electrically conductive collector tabs (also not shown in FIG. 1) may also be affixed to the positive electrode 118 and positioned or bent to further maintain and enhance this positive electrical contact during throughout the life of the cell. In one preferred embodiment, a collector tab made of a conductive material such as copper, nickel or nickel plated cold rolled steel is affixed at or near an axial edge of electrode 118 and oriented with the collector tab bent back around itself beyond the outer circumference of the jellyroll so that electrical contact is made and maintained with an axial sidewall of the container 112. Other connections between this collector tab and the container are also possible, including but not limited to connection at the bottom of container 112 and/or a plurality of such connections via one or more collector tabs. However, trade-offs with respect to the use of collector tab(s) is the potential for increased internal resistance within the cell, added complexity in manufacture, added materials cost and the like. Thus, it is most preferable to implement a design that does not require such collector tabs.

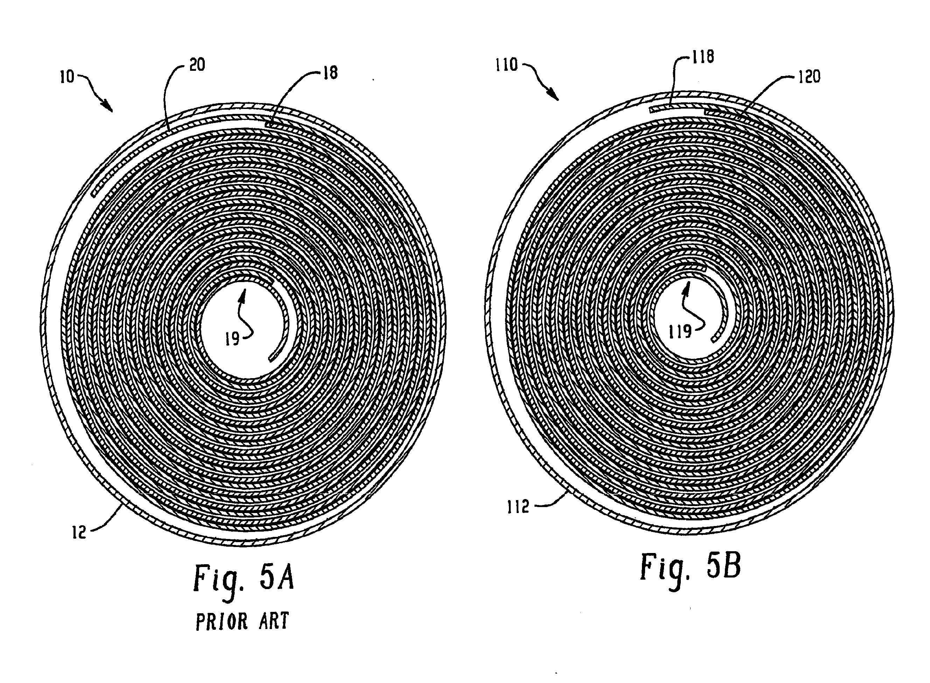

FIGs. 5A and 5B provides a comparative illustration of how the preferred jellyroll configuration of a positive polarity can will differ from that of previously available negative polarity configurations. In prior art cell 10 of FIG. 5A, electrode assembly 19 includes positive electrode 18 and negative electrode 20 which are spirally wound together and disposed within container 12. A separator (not shown) is disposed between positive electrode 18 and negative electrode 20. Note that an excess length of negative electrode must be used in comparison to positive electrode, as the negative electrode forms the outermost layer of assembly 19. In a typical AA sized container using a negative electrode comprising lithium and a positive electrode having iron disulfide, the length of the negative electrode (i.e., the portion that is wound radially around the core) is optimally 30.6 cm when fully unwound whereas the positive electrode's length is optimally 28.8 cm. Thus, in the prior art cell 10 of FIG. 5A, the length of the negative electrode 20 is provided in excess with the ratio of radially unwound positive electrode to negative electrode always being 1.0 or less and resulting in incomplete utilization of the lithium along the outermost layer of the electrode assembly 19 where it is unable to react with a corresponding layer of iron disulfide in the positive electrode 18.

FIG. 5B shows cell 110 according to one embodiment of the invention. Here, positive electrode 118 forms the outermost layer of electrode assembly 119. Consequently, negative electrode 120 will be shorter in length. For example, in a AA size container using a lithium and iron disulfide, negative electrode 120 can be shortened to 29.9 cm in radially unwound length, as compared to a length of 33.1 cm for the iron disulfide-based positive electrode 118. Thus, cell 110 would have a ratio of radially unwound positive electrode to negative electrode exceeding 1.0. Notwithstanding this 5% decrease in the amount of lithium provided to cell 110 (as compared to cell 10), equivalent or improved service life is achieved because the lithium within cell 110 will be fully utilized during discharge.

With positive electrode 118 forming the outer-most wind of the jellyroll configuration of electrodes 118, 120, the container 112 will serve as the positive terminal of the electrochemical cell 110, either along the axial sidewalls and/or the bottom of the container as described above. Electrodes 118, 120 have an axial length extending substantially parallel to a longitudinal length of container 112, generally along a central axis thereof. The upper ends of positive electrode 118 and negative electrode 120 are preferably coextensive and positive electrode current collector has an upper axial end substantially equal to the upper axial end height of the separator utilized and does not extend thereabove. Alternatively, one of the electrodes may be deliberately sized larger than the other to advantageously allow for enhanced electrical connection with the cell closure 114 or the bottom of container 112.

The positive electrode 118 for cell 110 may contain one or more active materials, usually in particulate form. Any suitable active cathode material may be used, and can include for example FeS₂, CuO, MnO₂, CFₓ and (CF)ₙ, although iron disulfide (FeS₂) is preferred as the dominant if not exclusive electrochemically active material. Other cathode materials may be possible, although the choice of cathode material will have direct impact on the optimal electrolyte, both in terms of chemical compatibility and overall cell performance, such that the header assembly must be specifically engineered to the materials selected.

The positive electrode 118 is preferably in the form of foil carrier, such as aluminum coated with chemically active materials, usually in particulate form. Iron disulfide is a preferred active material. In a Li/FeS₂ cell the active material comprises greater than 50 weight percent FeS₂. The positive electrode 18 can also contain one or more additional active materials, depending on the desired cell electrical and discharge characteristics. The additional active positive electrode material may be any suitable active positive electrode material. Examples include Bi₂O₃, C₂F, CFₓ. (CF)ₙ, CoS₂, CuO, CuS, FeS, FeCuS₂, MnO₂, Pb₂Bi₂O₅ and S.

More preferably, the active material for a Li/FeS₂ cell positive electrode generally comprises at least 95 weight percent FeS₂, desirably at least 99 weight percent FeS₂, and preferably FeS₂ is the sole active positive electrode material. Battery grade FeS₂ having a purity level of at least 95 weight percent is available from American Minerals, Inc., Camden, NJ, USA; Chemetall GmbH, Vienna, Austria; Washington Mills, North Grafton, MA; and Kyanite Mining Corp., Dillwyn, VA, USA.

In addition to the active material, the positive electrode mixture contains other materials. A binder is generally used to hold the particulate materials together and adhere the mixture to the current collector. One or more conductive materials such as metal, graphite and carbon black powders may be added to provide improved electrical conductivity to the mixture. The amount of conductive material used can be dependent upon factors such as the electrical conductivity of the active material and binder, the thickness of the mixture on the current collector and the current collector design. Small amounts of various additives may also be used to enhance positive electrode manufacturing and cell performance. The following are examples of active material mixture materials for Li/FeS₂ cell positive electrodes. Graphite: KS-6 and TIMREX® MX15 grades synthetic graphite from Timcal America, Westlake, OH, USA. Carbon black: Grade C55 acetylene black from Chevron Phillips Company LP, Houston, TX, USA. Binder: ethylene/propylene copolymer (PEPP) made by Polymont Plastics Corp. (formerly Polysar, Inc.) and available from Harwick Standard Distribution Corp., Akron, OH, USA; non-ionic water soluble polyethylene oxide (PEO): POLYOX® from Dow Chemical Company, Midland, MI, USA; and G1651 grade styrene-ethylene/butylenes-styrene (SEBS) block copolymer from Kraton Polymers, Houston, TX. Additives: FLUO HT® micronized polytetrafluoroethylene (PTFE) manufactured by Micro Powders Inc., Tarrytown, NY, USA (commercially available from Dar-Tech Inc., Cleveland, OH, USA) and AEROSIL® 200 grade fumed silica from Degussa Corporation Pigment Group, Ridgefield, NJ.

A preferred method of making FeS₂ positive electrodes is to roll coat a slurry of active material mixture materials in a highly volatile organic solvent (e.g., trichloroethylene) onto both sides of a sheet of aluminum foil, dry the coating to remove the solvent, calender the coated foil to compact the coating, slit the coated foil to the desired width and cut strips of the slit positive electrode material to the desired length. It is desirable to use positive electrode materials with small particle sizes to minimize the risk of puncturing the separator. For example, FeS₂ is preferably sieved through a 230 mesh (63 µm) screen before use. Coating thicknesses of 100 µm and less are common.

In a further embodiment, a positive electrode comprises FeS₂ particles having a predetermined average particle size produced by a wet milling method such as a media mill, or a dry milling method using a non-mechanical milling device such as a jet mill. Electrochemical cells prepared with the reduced average particle size FeS₂ particles exhibit increased cell voltage at any given depth of discharge, irrespective of cell size. The smaller FeS₂ particles also make possible thinner coatings of positive electrode material on the current collector; for example, coatings as thin as about 10 µm can be used. Preferred FeS₂ materials and methods for preparing the same are disclosed in U.S. Patent Application Serial Nos. 11/020,339 and 11/155,352, both fully incorporated herein by reference.

The foil carrier may serve as a current collector for positive electrode, or a current collector may otherwise be disposed within or imbedded into the positive electrode surface. To the extent a foil carrier is used, the positive electrode mixture may be coated onto one or both sides of a thin metal strip or foil and aluminum is the preferred material. Bare portions of only foil may extend beyond the portion where the positive electrode mixture is coated, so as to allow for better electrical contact with the various portions of the container 12 as described herein (e.g., the axial sidewall of the container, the bottom of the container, etc.).

Electrolytes for lithium cells, and particularly for lithium iron disulfide cells, are non-aqueous electrolytes and contain water only in very small quantities, for example, less than about 500 parts per million by weight, as a contaminant. Suitable non-aqueous electrolytes contain one or more electrolyte salts dissolved in an organic solvent. Any suitable salt may be used depending on the anode and cathode active materials and the desired cell performance. Examples include lithium bromide, lithium perchlorate, lithium hexafluorophosphate, potassium hexafluorophosphate, lithium hexafluoroamonate, lithium trifluoromethanesulfonate and lithium iodide. Suitable organic solvents include one or more of the following: dimethyl carbonate; diethyl carbonate; dipropyl carbonate; methylethyl carbonate; ethylene carbonate; propylene carbonate; 1,2,-butylene carbonate; 2,3-butylene carbonate; methaformate; gamma-butyrolactone; sulfolane; acetonitrile; 3,5-dimethylisoxazole; n,n-dimethylformamide; and ethers. The salt and solvent combination should provide sufficient electrolytic and electrical conductivity to meet the cell discharge requirements over the desired temperature range. When ethers are used in the solvent they provide generally low viscosity, good wetting capability, good low temperature discharge performance and high rate discharge performance. Suitable ethers include, but are not limited to, acyclic ethers such as 1,2-dimethoxyethane (DME); 1,2-diethoxyethane; di(methoxyethyl)ether; triglyme, tetraglyme and diethylether; cyclic ethers such as 1,3-dioxolane (DIOX), tetrahydrofuran, 2-methyl tetrahydrofuran and 3-methyl-2-oxazolidinone; and mixtures thereof.

A nonaqueous electrolyte, containing water only in very small quantities as a contaminant (e.g., no more than about 500 parts per million by weight, depending on the electrolyte salt being used), is used in the battery cell of the invention. Any nonaqueous electrolyte suitable for use with lithium and active positive electrode material may be used. The electrolyte contains one or more electrolyte salts dissolved in an organic solvent. For an Li/FeS₂ cell examples of suitable salts include lithium bromide, lithium perchlorate, lithium hexafluorophosphate, potassium hexafluorophosphate, lithium hexafluoroarsenate, lithium trifluoromethanesulfonate and lithium iodide; and suitable organic solvents include one or more of the following: dimethyl carbonate, diethyl carbonate, methylethyl carbonate, ethylene carbonate, propylene carbonate, 1,2-butylene carbonate, 2,3-butylene carbonate, methyl formate, γ-butyrolactone, sulfolane, acetonitrile, 3,5-dimethylisoxazole, n,n-dimethyl formamide and ethers. The salt/solvent combination will provide sufficient electrolytic and electrical conductivity to meet the cell discharge requirements over the desired temperature range. Ethers are often desirable because of their generally low viscosity, good wetting capability, good low temperature discharge performance and good high rate discharge performance. This is particularly true in Li/FeS₂ cells because the ethers are more stable than with MnO₂ positive electrodes, so higher ether levels can be used. Suitable ethers include, but are not limited to acyclic ethers such as 1,2-dimethoxyethane, 1,2-diethoxyethane, di(methoxyethyl) ether, triglyme, tetraglyme and diethyl ether; and cyclic ethers such as 1,3-dioxolane, tetrahydrofuran, 2-methyl tetrahydrofuran and 3-methyl-2-oxazolidinone.

Accordingly, various combinations of electrolyte salts and organic solvents can be utilized to form the electrolyte for electrochemical cells. The molar concentration of the electrolyte salt can be varied to modify the conductive properties of the electrolyte. Examples of suitable nonaqueous electrolytes containing one or more electrolyte salts dissolved in an organic solvent include, but are not limited to, a 1 mole per liter solvent concentration of lithium trifluoromethanesulfonate (14.60% by weight) in a solvent blend of 1,3-dioxolane, 1,2-diethoxyethane, and 3,5-dimethyl isoxazole (24.80:60.40:0.20% by weight) which has a conductivity of 2.5 mS/cm; a 1.5 moles per liter solvent concentration of lithium trifluoro-methanesulfonate (20.40% by weight) in a solvent blend of 1,3-dioxolane, 1,2-diethoxy-ethane, and 3,5-dimethylisoxazole (23.10:56.30:0.20% by weight) which has a conductivity of 3.46 mS/cm; and a 0.75 mole per liter solvent concentration of lithium iodide (9.10% by weight) in a solvent blend of 1,3-dioxolane, 1,2-diethoxyethane, and 3,5-dimethylisoxazole (63.10:27.60:0.20% by weight) which has a conductivity of 7.02 mS/cm. Electrolytes utilized in the electrochemical cells of the present invention have conductivity generally greater than about 2.0 mS/cm, desirably greater than about 2.5 or about 3.0 mS/cm, and preferably greater than about 4, about 6, or about 7 mS/cm.

Suitable separator materials are ion-permeable and electrically non-conductive. Examples of suitable separators include microporous membranes made from materials such as polypropylene, polyethylene and ultra high molecular weight polyethylene. A suitable separator material for Li/FeS₂ cells is available as CELGARD® 2400 microporous polypropylene membrane from Celgard Inc., of Charlotte, North Carolina, USA, and Setella F20DHI microporous polyethylene membrane available from Exxon Mobil Chemical Company of Macedonia, New York, USA. A layer of a solid electrolyte or a polymer electrolyte can also be used as a separator.

The separator is a thin microporous membrane that is ion-permeable and electrically nonconductive. It is capable of holding at least some electrolyte within the pores of the separator. The separator is disposed between adjacent surfaces of the anode and cathode to electrically insulate the electrodes from each other. Portions of the separator may also insulate other components in electrical contact with the cell terminals to prevent internal short circuits. Edges of the separator often extend beyond the edges of at least one electrode to insure that the anode and cathode do not make electrical contact even if they are not perfectly aligned with each other. However, it is desirable to minimize the amount of separator extending beyond the electrodes.

To provide good high power discharge performance it is desirable that the separator have the characteristics (pores with a smallest dimension of at least 0.005 µm and a largest dimension of no more than 5 µm across, a porosity in the range of 30 to 70 percent, an area specific resistance of from 2 to 15 ohm-cm.² and a tortuosity less than 2.5) disclosed in U.S. Pat. No. 5,290,414, hereby incorporated by reference. Suitable separator materials should also be strong enough to withstand cell manufacturing processes as well as pressure that may be exerted on the separator during cell discharge without tears, splits, holes or other gaps developing that could result in an internal short circuit. Additional suitable separator materials are described in U.S. Patent Application Serial Nos. 11/020,339 and 11/155,352, which claim priority to U.S. Patent Application Serial No. 10/719,425, herein fully incorporated herein by reference.

To minimize the total separator volume in the cell, the separator should be as thin as possible, but at least about 1 µm or more so a physical barrier is present between the cathode and anode to prevent internal short circuits. That said, the separator thickness ranges from about 1 to about 50 µm, desirably from about 5 to about 25 µm, and preferably from about 10 to about 16 or about 20 µm. The required thickness will depend in part on the strength of the separator material and the magnitude and location of forces that may be exerted on the separator where it provides electrical insulation.

Separator membranes for use in lithium batteries are often made of polypropylene, polyethylene or ultrahigh molecular weight polyethylene, with polyethylene being preferred. The separator can be a single layer of biaxially oriented microporous membrane, or two or more layers can be laminated together to provide the desired tensile strengths in orthogonal directions. A single layer is preferred to minimize the cost. Suitable single layer biaxially oriented polyethylene microporous separator is available from Tonen Chemical Corp., available from EXXON Mobile Chemical Co., Macedonia, N.Y., USA. Setela F20DHI grade separator has a 20 µm nominal thickness, and Setela 16MMS grade has a 16 µm nominal thickness.

The cell can be closed and sealed using any suitable process. Such processes may include, but are not limited to, crimping, redrawing, colleting and combinations thereof. For example, for the cell in FIG. 1, a bead is formed in the can after the electrodes and insulator cone are inserted, and the gasket and cover assembly (including the cell cover, contact spring and vent bushing) are placed in the open end of the can. The cell is supported at the bead while the gasket and cover assembly are pushed downward against the bead. The diameter of the top of the can above the bead is reduced with a segmented collet to hold the gasket and cover assembly in place in the cell. After electrolyte is dispensed into the cell through the apertures in the vent bushing and cover, a vent ball is inserted into the bushing to seal the aperture in the cell cover. A PTC device and a terminal cover are placed onto the cell over the cell cover, and the top edge of the can is bent inward with a crimping die to retain the gasket, cover assembly, PTC device and terminal cover and complete the sealing of the open end of the can by the gasket.

By providing an electrochemical cell with an electrode assembly as specified above, the quantity of lithium or separator, and preferably both, can be reduced as compared to a container negative cell of the same size and cell capacity can be increased. One reason that less lithium is required is because the lithium on the outer wrap of the spirally wound electrode of the container negative cell is only consumed or discharged from one side. In fact, the amount of lithium required in a AA size positive container cell may be reduced by approximately 2.5% in comparison to a similarly designed negative container cell, thereby resulting in substantial materials savings.

Three sets of cells were constructed from the preferred materials identified above. The first set were made using a "standard" negative-polarity can, hereafter referred to as the control group. The second set utilized the positive-polarity can in conjunction with an electrical connection between the positive electrode and the can only along the bottom of the can. The third set had a positive-polarity can in conjunction with an axial sidewall electrical connection between the positive electrode and the can.

These cells were then service tested, under continuous drain conditions, as shown in the Table 1 below. Note that results in Table 1 are reported as overall service, with the parenthetical number representing the percentage improvement in comparison to the control group.

**Table 1. Continuous Drain Performance**

| Test | Control | Bottom Contact | Wall Contact |
|---|---|---|---|
| 500 mW to 1.0V | 506 min | 529 min (105%) | 543 min (107%) |
| 1000 mW to 1.0V | 230 min | 244 min (106%) | 252 min (110%) |
| 1500 mW to 1.0V | 132 min | 143 min (107%) | 148 min (110%) |

Clearly, cells made with a positive-polarity container exhibited increased performance of anywhere from 5-10% over the control group. Other benefits, including increased performance at low temperatures, improved storage life, etc., may also be realized.

It will be understood by those who practice the invention and those skilled in the art that various modifications and improvements may be made to the invention without departing from the spirit of the disclosed concepts. The scope of protection afforded is to be determined by the claims and by the breadth of interpretation allowed by law.
1. An electrochemical cell, comprising:
   a container having an open end;
   a positive electrode comprising iron disulfide;
   a negative electrode comprising lithium;
   a non-aqueous electrolyte;
   a separator disposed between the positive electrode and the negative electrode, wherein the separator, the electrolyte, the positive electrode and the negative electrode are disposed in the container;
   a cover enclosing the open end of the container, said cover not making an electrical contact with the container; and
   wherein the positive electrode makes electrical contact with the container and the negative electrode makes electrical contact with a portion of the cover.
2. The electrochemical cell according to 1, wherein the cover further comprises a non-conductive portion which seals the cover to the container.
3. The electrochemical cell according to 1, wherein the cover further comprises an electrically conductive member oriented between the negative electrode and the cover.
4. The electrochemical cell according to 3, wherein the electrically conductive member is compressively held between the negative electrode and the cover.
5. The electrochemical cell according to 4, wherein the electrically conductive member is shaped to intersect an axis along at least two separate points, said axis passing through the cover and the container.
6. The electrochemical cell according to 4, wherein the electrically conductive member has a shape selected from the group consisting of: a coil and an accordion.
7. The electrochemical cell according to 1, wherein the positive electrode, the negative electrode and the separator are wound in a jellyroll configuration.
8. The electrochemical cell according to 7, wherein the iron disulfide is coated on a foil carrier and wherein the foil carrier makes direct electrical contact with the container.
9. The electrochemical cell according to 1, wherein the iron disulfide is coated on a foil carrier and wherein the foil carrier makes direct electrical contact with the container.
10. The electrochemical cell according to 1, wherein the container comprises a cylinder having an open end.
11. An electrochemical cell, comprising:
   a cylindrical container having an open end;
   a spiral-wound electrode assembly for a primary electrochemical cell situated within the container, said electrode assembly having a positive electrode comprising iron disulfide at least partially coated on a current collector, a negative lithium-based electrode, an electrolyte and a separator disposed between the electrodes;
   an end cap sized to enclose the open end of the container, wherein said end cap includes a terminal cover that has a negative polarity and the container has a positive polarity; and
   wherein the cylindrical container has a greater interior volumetric capacity than the end cap.
12. The electrochemical cell according to 11, wherein the iron disulfide is coated on opposing sides of the current collector.
13. The electrochemical cell according to 11, wherein the current collector is a metal foil.
14. The electrochemical cell according to 11, wherein the end cap includes a non-conductive gasket, said non-conductive gasket forming a seal between the end cap and the container.
15. The electrochemical cell according to 11, further comprising an anode tab positioned between the electrode assembly and the end cap.
16. The electrochemical cell according to 15, wherein the anode tab is free of any fixed connection to the end cap.
17. The electrochemical cell according to 15, wherein sidewalls of the cyndrical container define an axis substantially parallel to the sidewalls and wherein the anode tab longitudinally intersects the axis at least two separate points.
18. The electrochemical cell according to 15, wherein the anode tab has a shape selected from the group consisting of: a coil and an accordion.
19. The electrochemical cell according to 11, wherein the anode tab is electrically insulated.
20. The electrochemical cell according to 11, wherein the container comprises aluminum..
21. The electrochemical cell according to 11, wherein the end cap includes a contact spring that makes electrical contact with the electrode assembly.
22. The electrochemical cell according to 11, wherein the end cap includes an electrically insulating cone
23. An electrochemical cell, comprising:
   a cylindrical container having an open end;
   a cover fitted across the open end but insulated from any electrical contact with the container;
   a spiral-wound electrode assembly positioned within the container, said electrode assembly having a positive electrode, a negative electrode, an electrolyte and a separator disposed between the positive and negative electrodes, wherein the positive electrode makes positive electrical contact with the container and the negative electrode makes negative electrical contact with the cover, and
   a contact assembly disposed between the cover and the electrode assembly, wherein the contact assembly makes electrical contact with the negative electrode.
24. The electrochemical cell according to 23, wherein the positive electrode is coated on a foil carrier, said foil carrier making electrical contact with the container.
25. The electrochemical cell according to 23, wherein the contact assembly makes a non-fixed electrical connection with the cover.
26. The electrochemical cell according to 23, wherein the positive electrode and the negative electrode each have a radially unwound length and wherein a ratio of the length of the positive electrode to the length of the negative electrode exceeds 1.0.
27. The electrochemical cell according to 1, wherein the container comprises aluminum.
28. A method of manufacturing an electrochemical cell comprising:
   providing a cylindrical container having an open end;
   spirally winding an electrode assembly comprising a positive electrode, a negative electrode comprising lithium and a separator, said separator disposed between the positive and negative electrodes, so that the positive electrode forms an outermost layer of the electrode assembly;
   positioning the electrode assembly within the container so that the container makes a positive electrical contact with the electrode assembly; and
   sealing the container with a cover so that the cover makes a negative electrical contact with the electrode assembly.
29. A method according to 28, wherein the positive electrode comprises iron disulfide.
30. A method according to 28, wherein the positive electrode and the negative electrode each have a radially unwound length and wherein a ratio of the length of the positive electrode to the length of the negative electrode exceeds 1.0.

## Claims

1. An electrochemical cell, comprising:
a cylindrical container having an open end;
a spiral-wound electrode assembly for a primary electrochemical cell situated within the container, said electrode assembly having a positive electrode comprising iron disulfide at least partially coated on a current collector, a negative lithium-based electrode, an electrolyte and a separator disposed between the electrodes;
an end cap sized to enclose the open end of the container, wherein said end cap includes a terminal cover that has a negative polarity and the container has a positive polarity; an anode tab positioned between the electrode assembly and the end cap; and
wherein the cylindrical container has a greater interior volumetric capacity than the end cap.

2. The electrochemical cell according to claim 1, wherein the iron disulfide is coated on opposing sides of the current collector.

3. The electrochemical cell according to claim 1, wherein the current collector is a metal foil.

4. The electrochemical cell according to claim 1, wherein the end cap includes a non-conductive gasket, said non-conductive gasket forming a seal between the end cap and the container.

5. The electrochemical cell according to claim 1, wherein the anode tab is free of any fixed connection to the end cap.

6. The electrochemical cell according to claim 1, wherein the anode tab is electrically insulated.

7. The electrochemical cell according to claim 1, wherein the container comprises aluminum.

8. The electrochemical cell according to claim 1, wherein the end cap includes a contact spring that makes electrical contact with the electrode assembly.
